# FASCICULE DE BREVET EUROPEEN

(11) **EP 0 392 920 B1**
(45) Date de publication et mention de la délivrance du brevet: **19.01.1994**
(21) Numéro de dépôt: 90400982.6
(22) Date de dépôt: 10.04.1990
(51) Int. Cl.: G21C 3/32

(54) **Embout inférieur d'un assemblage combustible d'un réacteur nucléaire comportant un filtre de retenue de particules**
Kernreaktorbrennelementfussstück mit einem Teilchenrückhaltefilter
Nuclear reactor fuel assembly bottom nozzle comprising a particle retaining filter

(30) Priorité: 12.04.1989 FR 8904839
(43) Date de publication de la demande: 17.10.1990
(73) Titulaire: FRAMATOME, 92400 Courbevoie (FR); COGEMA, F-78141 Velizy Villacoublay (FR)
(72) Inventeur: Grattier, Bernard, F-69570 Dardilly (FR)
(74) Mandataire: Bouget, Lucien

(56) Documents cités:
- EP-A- 0 196 611
- EP-A- 0 289 829
- FR-A- 2 577 345
- US-A- 4 684 496

## Description

L'invention concerne un embout inférieur d'un assemblage combustible comportant un filtre de retenue de particules contenues dans le fluide de refroidissement du réacteur nucléaire, en particulier dans le cas de réacteurs nucléaires à eau sous pression.

Les réacteurs nucléaires à eau sous pression comportent un coeur constitué par des assemblages prismatiques disposés côte à côte en position verticale. Les assemblages comportent une ossature fermée par des embouts dans laquelle sont disposés les crayons combustibles.

L'un des embouts des assemblages, appelé embout inférieur, vient reposer sur la plaque inférieure de coeur qui est percée de trous au niveau de chacun des assemblages pour permettre le passage de l'eau de refroidissement du réacteur à travers le coeur, dans la direction verticale et de bas en haut.

Le fluide de refroidissement des crayons combustibles traverse la plaque adaptatrice de l'embout inférieur par des ouvertures appelées passages d'eau qui sont soit de forme circulaire (d'un diamètre d'environ 7 à 10 mm) ou oblongue (lumière d'environ 10 mm de large par 15 à 50 mm de longueur). Des débris qui peuvent être présents dans le circuit primaire du réacteur sont susceptibles d'être entraînés par l'eau sous pression en circulation et dans le cas où leur taille est faible (par exemple inférieure à 10 mm), ces débris peuvent passer au travers de la plaque adaptatrice de l'embout inférieur dont les passages d'eau ont une section importante. Ces débris peuvent venir se coincer entre les crayons combustibles et les cellules de la première grille c'est-à-dire de la grille entretoise maintenant les crayons suivant un réseau régulier disposée le plus bas dans l'assemblage. Ces débris soumis aux sollicitations hydrauliques axiales et transversales qui sont importantes dans cette zone peuvent user le gainage du crayon combustisble. Il risque d'en résulter une perte d'étanchéité de ce gainage ainsi qu'une augmentation du taux d'activité du circuit primaire du réacteur.

On a donc proposé des dispositifs permettant de filtrer le fluide de refroidissement du réacteur, soit pendant les essais à chaud soit encore pendant le fonctionnement du réacteur.

Dans le premier cas, les éléments filtrants peuvent être reliés à la plaque inférieure de coeur et disposés sur celle-ci dans la position des assemblages combustibles, avant le chargement du coeur, comme décrit par exemple dans le FR-A-2.577.345.

Dans le second cas, les éléments filtrants sont associés aux assemblages combustibles et généralement disposés dans leur embout inférieur. Les éléments filtrants fixés dans les embouts inférieurs des assemblages combustibles sont généralement constitués par des structures en tôle ou en fil métallique qui permettent d'arrêter les débris dont la taille est inférieure à la plus grande dimension de la section de passage entre un crayon combustible et une cellule de grille.

De tels éléments filtrants sont décrits par exemple dans les documents US-A-4.664.880, USA-4.684.496 et EP-A-0.196.611.

De tels dispositifs peuvent être complexes et introduisent une perte de charge relativement importante dans la circulation du fluide de refroidissement à travers l'assemblage combustible.

En outre, ces dispositifs placés dans l'embout inférieur de l'assemblage peuvent être relativement encombrants et gênants lors des opérations de chargement et de déchargement d'assemblages du coeur et lors du démontage et du remontage des liaisons des tubes-guides et de l'embout inférieur.

Le but de l'invention est donc de proposer un embout inférieur d'un assemblage combustible d'un réacteur nucléaire comportant une plaque adaptatrice, des pieds supports destinés à venir reposer sur la plaque inférieure de coeur du réacteur et un filtre de retenue de particules contenues dans le fluide de refroidissement du réacteur nucléaire constitué par un élément de forme plate présentant au moins une zone constituant une grille de filtration, une filtration efficace du fluide étant effectuée au niveau de l'embout, grâce à l'élément de forme plate, sans introduire de perte de charge excessive sur la circulation du fluide de refroidissement, sans augmenter l'encombrement de l'assemblage combustible au niveau de son embout inférieur et tout en gardant une possibilité de démontage facile de cet embout.

Dans ce but, l'élément de forme plate est fixé à la partie inférieure du pied support de l'assemblage pour venir reposer en service sur la plaque inférieure de coeur du réacteur nucléaire, la zone constituant la grille de filtration étant placée en vis-à-vis d'un passage d'eau de refroidissement à travers la plaque inférieure de coeur.

On va maintenant décrire, à titre d'exemples non limitatifs, en se référant aux figures jointes en annexe, plusieurs modes de réalisation d'un embout inférieur d'un assemblage combustible suivant l'invention.

La figure 1 est une vue en coupe verticale schématique d'un embout inférieur d'un assemblage combustible suivant l'invention.

La figure 2 est une vue en coupe suivant 2-2 de la figure 3 d'un embout inférieur d'un assemblage combustible, suivant l'invention et suivant un premier mode de réalisation.

La figure 3 est une vue de dessus suivant 3 de la figure 2.

La figure 4 est une vue à grande échelle d'une partie périphérique de l'embout représenté sur les figures 2 et 3.

La figure 5 est une vue en coupe verticale suivant 5-5 de la figure 6, d'un embout inférieur d'assemblages combustibles suivant l'invention et suivant un second mode de réalisation.

La figure 6 est une vue en coupe suivant 6-6 de la figure 5.

La figure 7 est une vue en coupe par un plan vertical, d'un embout inférieur d'assemblages combustibles suivant l'invention et suivant un troisième mode de réalisation.

La figure 8 est une vue de dessus partielle suivant 8 de la figure 7.

La figure 9 est une vue de dessus à grande échelle d'un moyen de fixation du filtre de retenue de l'embout représenté sur la figure 7.

La figure 10 est une vue latérale suivant 10 du moyen de fixation représenté sur la figure 9.

La figure 11 est une vue en coupe par un plan vertical d'un embout inférieur suivant l'invention et suivant un quatrième mode de réalisation.

La figure 12 est une vue de dessus suivant 12 de la figure 11.

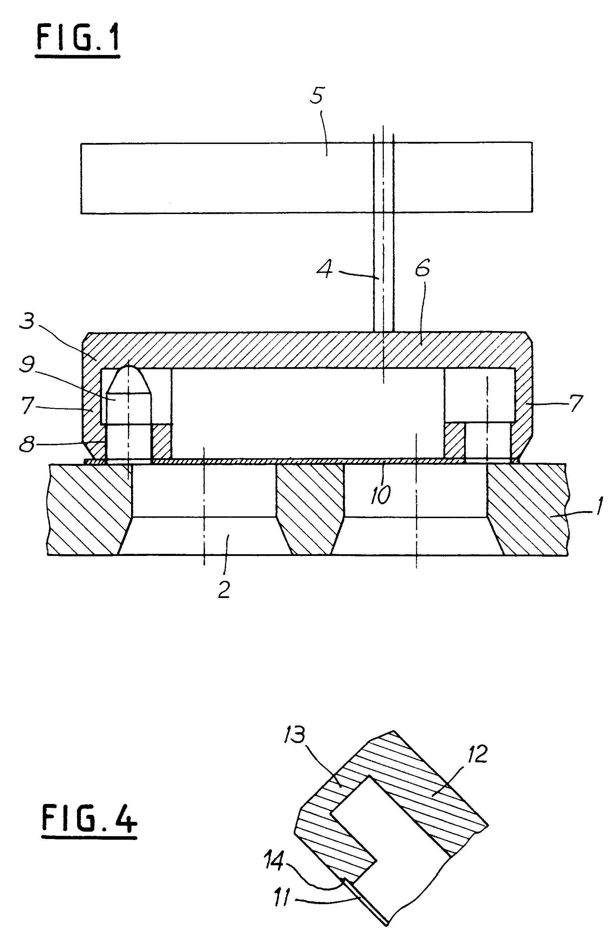

Sur la figure 1, on voit la plaque inférieure de coeur 1 d'un réacteur nucléaire à eau sous pression qui est traversée par des trous de passage d'eau 2 à la verticale d'un assemblage combustible dont une partie de l'ossature est visible sur la figure 1.

L'ossature comporte en particulier un embout inférieur 3, un ensemble de tubes-guides tels que 4 et des grilles-entretoises telles que 5.

L'embout inférieur 3 comporte une plaque adaptatrice 6 dans laquelle sont fixées les extrémités des tubes-guides 4 et des pieds-supports 7 pouvant comporter une ouverture 8 assurant le positionnement de l'assemblage combustible sur des pions 9 de centrage de la plaque inférieure de coeur 1.

Selon l'invention, un élément plat de filtration 10 est fixé sous les pieds 7 de l'embout inférieur 6, de manière à venir reposer sur la face supérieure de la plaque inférieure de coeur 1 lorsque l'assemblage combustible est en service.

L'élément de filtration plat 10 peut être constitué par une plaque percée de trous de filtration soigneusement calibrés, dans des zones destinées à venir en vis-à-vis des trous de passage 2 de la plaque inférieure de coeur 1.

De cette manière, l'eau de refroidissement du réacteur parvenant à l'extrémité inférieure de l'assemblage combustible par les trous de passage 2 est filtrée par la plaque 10 qui retient les débris susceptibles d'être entraînés par le fluide de refroidissement du réacteur et dont la taille est supérieure à la dimension de la cellule de grille qui peut être par exemple de l'ordre de 2 à 4 mm.

Sur la figure 1, on n'a pas représenté les éléments de fixation de la plaque 10 sous les pieds 7 de l'embout, seule la position de cette plaque 10 par rapport à la plaque inférieure de coeur 1 et à l'embout inférieur 3 étant illustrée par la figure.

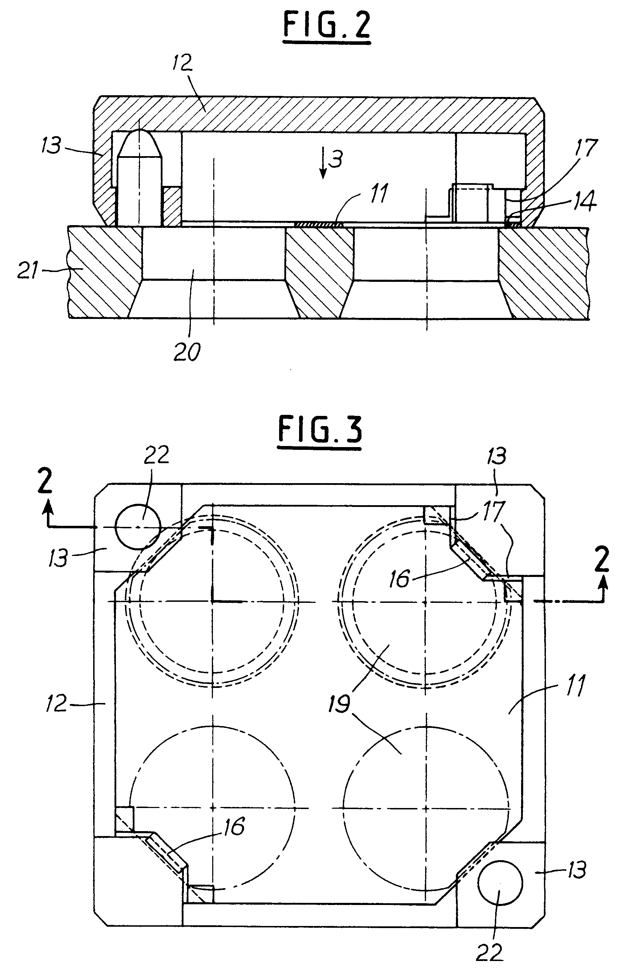

Sur les figures 2, 3 et 4, on voit un premier mode de réalisation des éléments de fixation d'une plaque de retenue de débris 11 sous les pieds 13 d'un embout inférieur 12 d'un assemblage combustible.

Chacun des pieds 13 est usiné pour constituer un embrèvement 14 dont la hauteur correspond à l'épaisseur de la plaque 11.

Les angles de la plaque 11 viennent s'engager dans les embrèvements 14 des pieds 13, de manière que l'assemblage puisse reposer sur la plaque inférieure de coeur par l'intermédiaire de la surface inférieure des pieds 13. Cette surface inférieure est soigneusement usinée de manière à assurer une parfaite verticalité de l'assemblage combustible. En outre, la plaque 11 est retenue contre les pieds 13 et peut ainsi résister à la poussée hydraulique due à la circulation du fluide de refroidissement.

De plus, la plaque 11 comporte au niveau de deux de ses angles opposés, des bords relevés 16 repliés à leur partie supérieure pour constituer un épaulement venant en prise sur la partie supérieure du pied 13 correspondant.

Les bords relevés 16 constituent des lames élastiques d'encliquetage assurant la fixation de la plaque 11 sur l'embout 12, lorsque cette plaque est engagée par le dessous dans le cadre de l'embout 12, de manière que les angles de la plaque comportant les rebords 16 soient engagés sur deux pieds 13 situés suivant une diagonale de l'embout.

De part et d'autre du bord relevé 16 d'encliquetage, deux bords relevés 17 disposés angulairement suivant les faces du pied 13 assurent un positionnement parfait de la plaque 11 à l'intérieur de l'embout 12.

La plaque 11 comporte quatre zones 19 circulaires dont la forme et les dimensions correspondent à celles des trous de passage 20 de l'eau de refroidissement à travers la plaque inférieure de coeur 21.

Dans les zones 19, la plaque 11 comporte des trous traversant dont la dimension permet d'assurer la filtration de débris ayant une certaine taille.

Ces zones 19 constituent les parties actives de la plaque de retenue 11.

Les lames élastiques d'encliquetage 16 sont engagées sur les pieds 13 ne comportant pas de trous de positionnement 22 (appelés trous S) qui sont placés suivant une diagonale de l'embout 12.

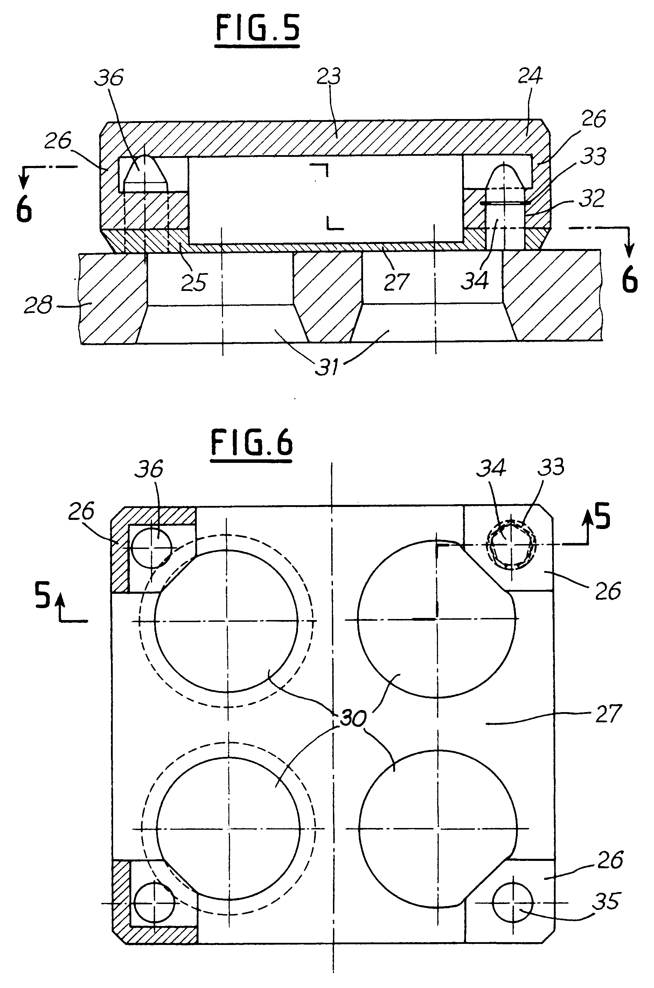

Sur les figures 5 et 6, on voit un second mode de réalisation d'un embout inférieur d'assemblage combustible suivant l'invention comportant un filtre de retenue de débris à sa partie inférieure.

L'embout inférieur 23 comporte une partie supérieure 24 sensiblement identique à un embout d'assemblage combustible de structure classique comportant cependant des pieds 26 d'une hauteur plus faible et une partie inférieure 25 rapportée sur l'extrémité inférieure des pieds 26 dont la partie centrale 27 constitue la plaque de filtration de l'embout inférieur 23.

L'embout inférieur 23 repose sur la plaque inférieure de coeur 28 par l'intermédiaire de la partie 25 de l'embout. La partie centrale de cette partie 25 constituant la plaque 27 comporte quatre zones actives 30 situées en vis-à-vis des trous de passage d'eau 31 à travers la plaque inférieure de coeur 28.

Ces parties actives 30 sont constituées par des zones circulaires dans lesquelles la plaque 27 est traversée par des trous de passage d'eau assurant l'arrêt de débris d'une certaine taille.

La partie 25 de l'embout est assemblée à la partie 24 par encliquetage. Pour celà, la partie 25 comporte, suivant deux de ses angles, des pions 34 destinés à venir s'engager dans un alésage 32 d'un pied correspondant 26 de la partie 24 de l'embout

Un jonc élastique 33 comportant un contour intérieur hexagonal engagé sur le pion 34 vient s'encliqueter dans une gorge de l'alésage 32, lorsque le pion 34 est introduit par poussée dans cet alésage. On assure ainsi un maintien suffisant de la partie 25 de l'embout 23 sur la partie 24 pour assurer le transport de l'assemblage muni du filtre de retenue 27.

Généralement, deux pieds 26 disposés suivant une diagonale de l'embout 23 comportent un alésage 32 permettant l'engagement d'un pion 34.

Suivant l'autre diagonale de l'embout 23, les pieds 26 comportent des trous 35 pour le passage de pions de positionnement 36 de l'assemblage combustible en saillie sur la face supérieure de la plaque inférieure de coeur 28.

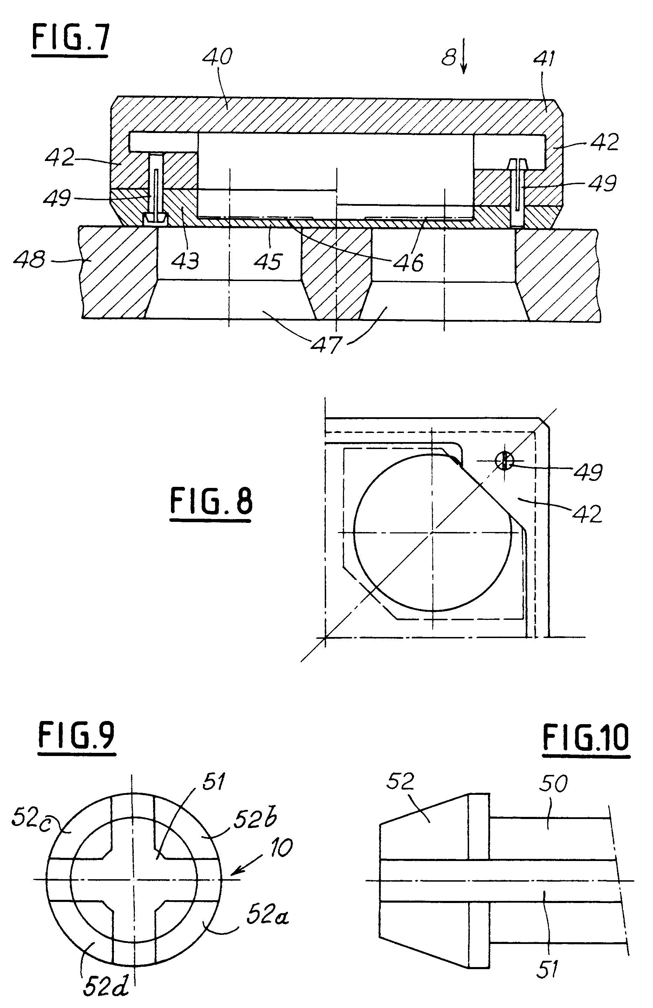

Sur les figures 7, 8, 9 et 10, on a représenté un troisième mode de réalisation d'un embout inférieur 40 suivant l'invention.

L'embout 40 comporte, comme l'embout 23 représenté sur les figures 5 et 6, une partie supérieure 41 dont la forme est identique à la forme d'un embout inférieur d'assemblage combustible avec toutefois des pieds 42 d'une hauteur inférieure ainsi qu'une partie inférieure 43 rapportée sur l'extrémité inférieure des pieds 42 ; la partie centrale 45 de la partie 43 constitue une plaque de filtration anti-débris ayant des parties actives 46 dans lesquelles la plaque 45 est percée de trous de dimension déterminée, les parties 46 étant placées au- dessus des ouvertures 47 traversant la plaque inférieure de coeur 48.

La partie inférieure 43 de l'embout 40 est fixée sur l'extrémité inférieure des pieds 42 de la partie supérieure 41 par des pions encliquetables 49.

Les pions encliquetables 49 comportent un fût 50 dans lequel sont usinées, sur une certaine longueur, deux rainures à 90° 51 et une tête 52 élargie de forme tronconique partagée en quatre parties 52a, 52b, 52c et 52d par le prolongement des rainures 51 en forme de croix.

L'un des pions encliquetables 49 est fixé par son fût sur l'un des pieds 42 de la partie supérieure 41 de l'embout 40. L'autre pion encliquetable 49 est fixé sur la partie inférieure 43 de l'embout 40 comportant la plaque de filtration anti-débris 45.

L'assemblage des parties 43 et 41 de l'embout est réalisé en engageant le pion 49 lié à la partie 43 dans un trou traversant un pied 42 de la partie supérieure 41 de l'embout et en engageant simultanément le pion 49 lié à la partie supérieure 41 de l'embout 40, dans une ouverture traversant la partie inférieure 41 de l'embout et comportant une partie inférieure à diamètre élargi.

L'engagement des pions 49 dans les ouvertures correspondantes est facilité par la forme tronconique de la tête 52 dont les quatre parties sont susceptibles de se rapprocher pour permettre le passage du pion dans le trou correspondant.

Lorsque la tête 52 du pion 49 débouche au-dessus du pied de l'assemblage ou dans la partie élargie de l'alésage traversant la partie inférieure 43 de l'embout, les quatre parties de la tête 52 s'écartent radialement les unes des autres pour assurer la fixation des deux parties de l'embout l'une sur l'autre.

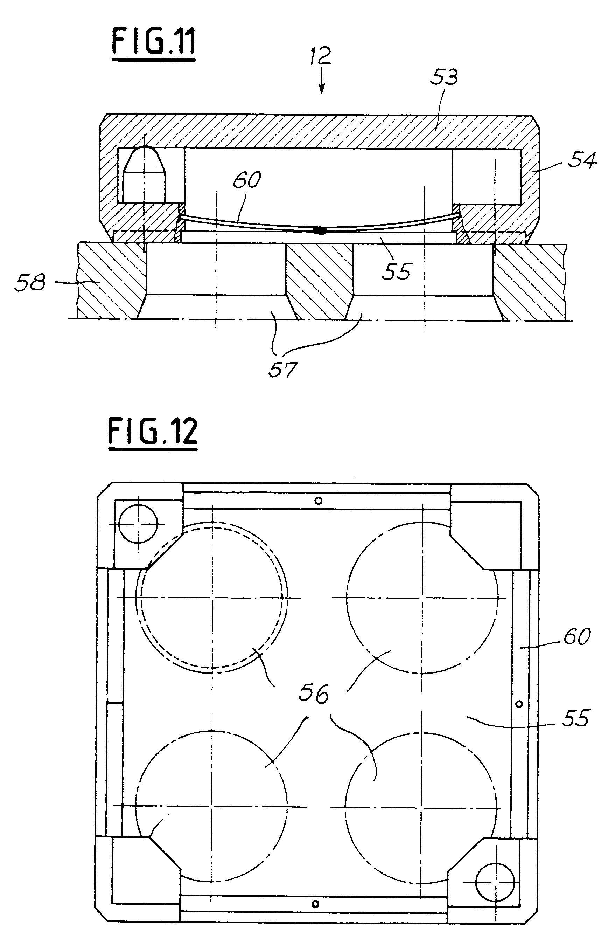

Sur les figures 11 et 12, on a représenté un embout 53 suivant un quatrième mode de réalisation de l'invention.

L'embout 53 comporte des pieds 54 dont la partie inférieure est usinée pour recevoir une plaque de filtration anti-débris 55. La plaque 55 comporte quatre zones actives 56 percées de trous de dimension déterminée et situées au niveau des passages de traversée 57 de la plaque inférieure de coeur 58.

Quatre lames élastiques 60 sont fixées suivant les bords de la plaque de fixation 55 de manière à être engagés entre les pieds 54 de l'embout 53 lorsque la plaque 55 est poussée à l'intérieur de l'embout, jusqu'à venir en place dans les embrèvements usinés dans les pieds 54.

Les extrémités des lames élastiques 60 viennent alors se loger dans des cavités usinées sur la surface intérieure des pieds 54 pour réaliser le blocage en position de la plaque de fixation 55 sur l'embout 53.

Les lames élastiques 60 sont fixées sur la plaque 55, par leur partie centrale, par soudage par transparence ou par résistance ou encore par rivetage.

Dans tous les cas, la plaque constituant le filtre de retenue des particules contenues dans le fluide de refroidissement du réacteur peut être fixée sous l'embout inférieur de l'assemblage combustible de manière rapide et avec un très bon positionnement.

L'élément de forme plate constituant le filtre de retenue des débris n'augmente pas l'encombrement de l'assemblage et n'apporte pas de gêne pour des opérations de manutention ou de démontage de cet assemblage, dans la mesure où il peut être facilement séparé de l'embout inférieur.

En outre, cet élément de forme plate introduit une faible perte de charge sur la circulation du fluide de refroidissement, puisque les trous des parties actives se trouvent directement à la sortie des passages de traversée 20 de la plaque inférieure de coeur 21.

Dans le cas où l'embout inférieur est constitué en deux parties, la partie inférieure comportant la plaque de retenue des débris, la fixation n'est réalisée que suivant une diagonale de l'embout, grâce à des pions encliquetables. Cette partie de l'embout doit donc présenter une bonne rigidité pour éviter son décollement au niveau des pieds dans lesquels ne sont pas engagés de moyens de fixation, lors des opérations de manutention de l'assemblage combustible.

Il est également possible d'ajouter sur la seconde diagonale des dispositifs de retenue, par exemple à lames élastiques encliquetables tels que ceux qui ont été décrits en regard des figures 2 et 3.

La réalisation de l'embout avec une partie inférieure constituant la plaque de retenue des débris offre l'avantage d'assurer une continuité entre les pieds de l'embout, ce qui peut améliorer son comportement lors de la manutention et lors de la dépose de l'assemblage combustible, la surface de support de l'assemblage étant alors augmentée, ce qui peut assurer une certaine stabilité dans le cas où l'on dépose de manière involontaire un pied de l'assemblage au niveau d'un trou de traversée de la plaque inférieure de coeur.

L'invention ne se limite pas aux modes de réalisation qui ont été décrits.

C'est ainsi qu'on peut envisager d'autres formes de réalisation des moyens de fixation de l'élément de forme plate constituant le filtre de retenue des particules du fluide de refroidissement.

De préférence, ces moyens doivent permettre un démontage facile et rapide de l'élément de filtration, par exemple pour accèder à la plaque adaptatrice de l'embout.

L'invention s'applique dans le cas de tout assemblage combustible pour un réacteur nucléaire refroidi à l'eau.

## Revendications

1. Embout inférieur d'un assemblage combustible d'un réacteur nucléaire comportant une plaque adaptatrice, des pieds-supports (7; 13; 26; 42; 54) et un filtre de retenue de particules contenues dans le fluide de refroidissement du réacteur nucléaire constitué par un élément de forme plate (10; 11; 27; 45; 55) présentant au moins une zone (19; 30; 46; 56) constituant une grille de filtration, caractérisé par le fait que l'élément de forme plate (10; 11; 27; 45; 55) est fixé à la partie inférieure de pieds-supports (7; 13; 26; 42; 54) de l'assemblage pour venir reposer en service sur la plaque inférieure de coeur (1; 21; 28; 48; 58) du réacteur nucléaire, la zone constituant la grille de filtration (19; 30; 46; 56) étant placée en vis-à-vis d'un passage d'eau de refroidissement (2; 20; 31; 47; 57) à travers la plaque inférieure de coeur.

2. Embout inférieur suivant la revendication 1, caractérisé par le fait que l'élément de forme plate (11) est constitué par une plaque comportant au moins une zone (19) percée d'ouvertures constituant une grille de filtration et au moins deux bords relevés à 90° (16) disposés suivant une diagonale de la section de l'embout comportant chacun un épaulement destiné à venir sur la surface supérieure d'un pied-support (13) lorsque la plaque (11) est introduite à l'intérieur de l'embout (12), entre ses pieds-supports (13).

3. Embout suivant la revendication 2, caractérisé par le fait qu'il comporte de plus, de part et d'autre des bords relevés encliquetables (16), des bords relevés de maintien (17) destinés à venir en contact avec deux faces différentes d'un pied-support (13).

4. Embout inférieur suivant l'une quelconque des revendications 2 et 3, caractérisé par le fait que chacun des pieds-supports (13) est usiné sur sa face inférieure pour constituer un embrèvement (14) dans lequel est introduit un bord de la plaque (11), les embrèvements (14) ayant une hauteur au moins égale à l'épaisseur de la plaque (11).

5. Embout suivant la revendication 1, caractérisé par le fait qu'il comporte une partie supérieure (23) comportant des pieds (26) et une partie inférieure (25) constituant la plaque de filtration (27) comportant des moyens d'assemblage (34, 49) assurant sa fixation à l'extrémité inférieure des pieds (26).

6. Embout suivant la revendication 5, caractérisé par le fait que les moyens de fixation (34) sont constitués par au moins deux pions solidaires de la partie inférieure (25) de l'embout engageables dans des ouvertures (32) des pieds (26) et par un jonc (33) disposé autour de chacun des pions (34) engageable dans une cavité débouchant dans l'alésage (32).

7. Embout suivant la revendication 5, caractérisé par le fait que les éléments de fixation (49) sont constitués par un pion encliquetable (49) solidaire de la partie inférieure (43) de l'embout (40), un pion encliquetable (49) solidaire d'un pied (42) de l'embout (40) et des ouvertures pour l'engagement des pions (49) dans la partie inférieure (43) de l'embout (40) et dans l'un des pieds (42) de la partie supérieure (41) de l'embout (40).

8. Embout suivant la revendication 7, caractérisé par le fait que les pions encliquetables (49) comportent un fût cylindrique (50) et une tête tronconique (52) séparée en plusieurs secteurs à déformation radiale grâce des fentes (51).

9. Embout suivant la revendication 1, caractérisé par le fait que l'élément de forme plate est constitué par une plaque (55) de forme sensiblement carrée comportant des ouvertures dans au moins une zone de filtration et suivant les bords de laquelle sont fixées des lames élastiques (60) engageables entre les pieds-supports (54) de l'embout (53).

## Patentansprüche

1. Kernreaktorbrennelementfußstück mit einer Anpassungsplatte, Tragefüßen (7; 13; 26; 42; 54) und einem Rückhaltefilter der Teilchen, die in der Kühlflüssigkeit des Kernreaktors enthalten sind, das gebildet ist von einem Element mit flacher Form (10; 11; 27; 45; 55), das zumindest einen Bereich (19; 30; 46; 56) aufweist, der ein Filtergitter bildet, dadurch gekennzeichnet, daß das Element mit flacher Form (10; 11; 27; 45; 55) am unteren Teil der Tragefüße (7; 13; 26; 42; 54) des Brennelemtes befestigt ist, um in Betrieb auf der unteren Kernplatte (1; 21; 28; 48; 58) des Kernreaktors zu ruhen, wobei der Bereich, der das Filtergitter (19; 30; 46; 56) bildet, gegenüber einem Durchlauf des Kühlwassers (2; 20; 31; 47; 57) durch die untere Kernplatte angeordnet ist.

2. Fußstück gemäß Anspruch 1, dadurch gekennzeichnet, daß das Element mit flacher Form (11) von einer Platte gebildet ist, die zumindest einen Bereich (19) aufweist, der von Öffnungen durchbohrt ist und der ein Filtergitter bildet, und zumindest zwei um 90° aufgerichtete Kanten (16), die gemäß einer Diagonalen des Abschnitts des Fußstücks angeordnet sind, und die jede einen Absatz aufweisen, der dazu bestimmt ist, auf der oberen Fläche eines Tragefußes (13) aufzuliegen, wenn die Platte (11) in das Innere des Fußstücks (12) zwischen seinen Tragefüßen (13) eingeführt ist.

3. Fußstück gemäß Anspruch 2, dadurch gekennzeichnet, daß es außerdem beidseits der aufgerichteten einrastbaren Kanten (16) aufgerichtete Haltekanten (17) aufweist, die dazu bestimmt sind, mit zwei verschiedenen Flächen eines Tragefußes (13) in Kontakt zu kommen.

4. Fußstück gemäß irgendeinem der Ansprüche 2 und 3, dadurch gekennzeichnet, daß jeder der Tragefüße (13) auf seiner unteren Seite bearbeitet ist, um eine Versatzung (14) zu bilden, in die eine Kante der Platte (11) eingeführt ist, wobei die Versatzungen (14) eine Höhe haben, die zumindest gleich der Dicke der Platte (11) ist.

5. Fußstück gemäß Anspruch 1, dadurch gekennzeichnet, daß es einen oberen Teil (23) mit Füßen (26) und einen unteren Teil (25) aufweist, der die Filtrationsplatte (27) bildet, die Einbaumittel (34, 49) aufweist, die ihre Befestigung am unteren Ende der Füße (26) gewährleisten.

6. Fußstück gemäß Anspruch 5, dadurch gekennzeichnet, daß die Befestigungsmittel (34) von zumindest zwei Pionen gebildet sind, die einstückig mit dem unteren Teil (25) des Fußstücks sind, und die in die Öffnungen (32) der Füße (26) einzuschieben sind, und von einem Verbindungsring (33), der um jeden der Pione (34) angeordnet ist, und der in eine Verteifung, die in die Bohrung (32) einmündet, einzuschieben ist.

7. Fußstück gemäß Anspruch 5, dadurch gekennzeichnet, daß die Befestigungselemente (49) von einem einrastbaren Pion (49) gebildet sind, der einstückig mit dem unteren Teil (43) des Fußstücks (40) ist, und von einem einrastbaren Pion (49), der einstückig mit einem Fuß (42) des Fußstücks (40) ist, und von Öffnungen zum Eingriff der Pione (49) in den unteren Teil (43) des Fußstücks (40) und in einen der Füße (42) des oberen Teils (41) des Fußstücks (40).

8. Fußstück gemäß Anspruch 7, dadurch gekennzeichnet, daß die einrastbaren Pione (49) einen zylindrischen Schaft (50) aufweisen und einen kegelstumpfartigen Kopf (52), der dank Schlitzen (51) in mehrere Abschnitte zur radialen Verformung unterteilt ist.

9. Fußstück gemäß Anspruch 1, dadurch gekennzeichnet, daß das Element mit flacher Form von einer Platte (55) mit praktisch quadratischer Form gebildet ist, die Öffnungen in zumindest einem Filtrationsbereich aufweist, und entlang deren Kanten elastische Blättchen bzw. Plättchen (60) befestigt sind, die zwischen die Tragefüße (54) des Fußstücks (53) einzuschieben sind.

## Claims

1. Lower connector of a fuel assembly of a nuclear reactor, comprising an adaptor plate, supporting feet (7; 13; 26; 42; 54) and a filter for the retention of particles contained in the coolant fluid of the nuclear reactor, consisting of an element of flat form (10; 11; 27; 45; 55) having at least one zone (19; 30; 46; 56) constituting a filtration grating, characterised in that the element of flat form (10; 11; 27; 45; 55) is fastened to the lower part of the supporting feet (7; 13; 26; 42; 54) of the assembly, in order, during operation, to come to rest on the lower core plate (1; 21; 28; 48; 58) of the nuclear reactor, the zone constituting the filtration grating (19; 30; 46; 56) being located opposite a cooling-water channel (2; 20; 31; 47; 57) through the lower core plate.

2. Lower connector according to Claim 1, characterised in that the element of flat form (11) consists of a plate having at least one zone (19) pierced with orifices constituting a filtration grating and at least two edges raised at 90° (16) arranged along a diagonal of the cross-section of the connector and each having a shoulder adapted to come onto the upper surface of a supporting foot (13) when the plate (11) is introduced into the connector (12) between its supporting feet (13).

3. Connector according to Claim 2, characterised in that it additionally possesses, on either side of the snap-in raised edges (16), raised holding edges (17) adapted to come into contact with two different faces of a supporting foot (13).

4. Lower connector according to either one of Claims 2 and 3, characterised in that each of the supporting feet (13) is machined on its lower face to form a recess (14), into which one edge of the plate (11) is introduced, the recesses (14) having a height at least equal to the thickness of the plate (11).

5. Connector according to Claim 1, characterised in that it comprises an upper part (23) having feet (26) and a lower part (25) forming the filtration plate (27) having connection means (34, 49) ensuring that it is fastened to the lower end of the feet (26).

6. Connector according to Claim 5, characterised in that the fastening means (34) consist of at least two studs secured to the lower part (25) of the connector and engageable into orifices (32) in the feet (26), and of a ring (33) arranged around each of the studs (34) and engageable into a cavity opening into the bore (32).

7. Connector according to Claim 5, characterised in that the fastening elements (49) consist of a snap-in stud (49) secured to the lower part (43) of the connector (40), a snap-in stud (49) secured to a foot (42) of the connector (40) and orifices for the engagement of the studs (49) into the lower part (43) of the connector (40) and into one of the feet (42) of the upper part (41) of the connector (40).

8. Connector according to Claim 7, characterised in that the snap-in studs (49) comprise a cylindrical shank (50) and a frustoconical head (52) separated into a plurality of radially deformable sectors by means of slots (51).

9. Connector according to Claim 1, characterised in that the element of flat form consists of a plate (55) of substantially square form which has orifices in at least one filtration zone and along the edges of which are fastened elastic strips (60) engageable between the supporting feet (54) of the connector (53).
